# EUROPÄISCHE PATENTSCHRIFT

(11) **EP 2 774 133 B1**
(45) Veröffentlichungstag und Bekanntmachung des Hinweises auf die Patenterteilung: **01.08.2018**
(21) Anmeldenummer: 12790402.7
(22) Anmeldetag: 01.11.2012
(51) Int. Cl.: G08G 1/16, B60Q 9/00, B60W 40/00

(54) **VERFAHREN ZUM AUSGEBEN VON WARNMELDUNGEN EINES FAHRERASSISTENZSYSTEMS UND DAZUGEHÖRIGES FAHRERASSISTENZSYSTEM**
METHOD FOR OUTPUTTING ALERT MESSAGES OF A DRIVER ASSISTANCE SYSTEM AND ASSOCIATED DRIVER ASSISTANCE SYSTEM
PROCÉDÉ D'ÉMISSION DE MESSAGES D'ALERTE D'UN SYSTÈME D'AIDE À LA CONDUITE ET SYSTÈME D'AIDE À LA CONDUITE ASSOCIÉ

(30) Priorität: 01.11.2011 DE 102011117297
(43) Veröffentlichungstag der Anmeldung: 10.09.2014
(73) Patentinhaber: Volkswagen Aktiengesellschaft, 38440 Wolfsburg (DE)
(72) Erfinder: WÄLLER, Christoph, 38106 Braunschweig (DE); RHEDE, Johannes, 10557 Berlin (DE); PETERMANN, Ina, 38440 Wolfsburg (DE); SEMMLER, Carsten, 38162 Cremlingen (DE); KLEEN, Andro, 47057 Duisburg (DE); NEUMANN, Markus, 38533 Vordorf (DE)
(86) Internationale Anmeldenummer: PCT/EP2012/004559
(87) Internationale Veröffentlichungsnummer: WO 2013/064254

(56) Entgegenhaltungen:
- DE-A1-102004 041 229
- DE-A1-102007 029 033
- DE-A1-102009 034 386
- US-A1- 2008 084 283
- US-A1- 2008 091 352
- US-B2- 7 786 896

## Beschreibung

Die vorliegende Erfindung betrifft ein Verfahren zum Ausgeben von Warnmeldungen eines Fahrerassistenzsystems in einem Fahrzeug und ein dazugehöriges Fahrerassistenzsystem.

In Fahrzeugen werden in zunehmendem Maße Fahrerassistenzsysteme bzw. Module für solche Systeme eingesetzt, welche den Fahrer des Fahrzeugs bei der Fahraufgabe unterstützen. Die Fahrerassistenzsysteme umfassen hierfür Sensoren, um Ereignisse in der Umgebung des Fahrzeugs, im Innenraum des Fahrzeugs oder von Fahrzeugeinrichtungen erzeugte Ereignisse zu erfassen. Die von den Sensoren erzeugten Daten werden ausgewertet und in Signale umgewandelt, welche den Fahrer beim Fahren des Fahrzeugs unterstützen. Die erzeugten Signale können zu einer Ausgabe von Informationen oder Warnhinweisen führen. Ferner können die Signale auch direkt in das Fahrgeschehen eingreifen, indem beispielsweise die Bremsen des Fahrzeugs in definierter Weise betätigt werden.

Es gibt mittlerweile eine Vielzahl von Fahrerassistenzprogrammen zur Unfallgefahrenerkennung, die in Fahrzeugen eingesetzt werden. Hierzu zählen beispielsweise ein Spurhalteassistent bzw. eine Spurhalteunterstützung, ein Abstandsregeltempomat (adaptive cruise control; ACC), ein Kollisionsradar, eine Einrichtung zur automatischen Notbremsung, ein Antiblockiersystem, eine Antischlupfregelung, ein elektronisches Stabilitätsprogramm, sowie eine Einparkhilfe.

Wenn in einem Fahrzeug eine große Anzahl an Fahrerassistenzprogrammen eingesetzt wird, ergibt sich der Bedarf für eine möglichst intuitive erfassbare Darstellung der Systemausgaben. Mit wachsender Anzahl an Fahrerassistenzmodulen wird die Bedienung und das Ablesen oder Erfassen der Programmausgaben nämlich immer schwieriger.

Die DE 10 2007 029 033 A1 beschreibt ein Verfahren zur Ausgabe von Warnungen für ein Kraftfahrzeug mit einer Vielzahl von Fahrerassistenzsystemen. Um dabei dem Fahrer eine einfache Informationsaufnahme zu ermöglichen, werden die Warnungen in wenigstens zwei verschiedene Zeitkritikalitätsklassen eingeteilt und in deren Abhängigkeit visualisiert. Die Ausgabe der Warnungen erfolgt über die Darstellung von Schutzringen, die verschiedenen Schutzzonen anzeigen, die um eine graphische Repräsentation des Fahrzeugs ausgebildet sind. Die einzelnen Schutzringe entsprechen den Zeitkritikalitätsklassen. Zeitkritische Warnungen werden durch einen weiter innen liegenden Schutzring visualisiert und vorzugsweise je nach Zeitkritikalität nicht nur visuell, sondern zusätzlich haptisch und/oder akustisch signalisiert.

Die DE 102 44 205 A1 beschreibt ein Verfahren und eine Einrichtung zur Kollisionsverhinderung von Fahrzeugen, bei dem Bewegungsgrößen des Fahrzeugs mittels Sensoren erfasst werden. Hieraus werden ein Vorfahrtsmissachtungsmaß und ein Kollisionsgefährdungsmaß abgeleitet, aus denen eine Gefährdungsstufe ermittelt wird. Bei geringer Gefährdung kann der Fahrer durch optische und/oder akustische Signale auf die Gefährdungssituation aufmerksam gemacht werden. In weiteren Eskalationsstufen können zusätzlich haptische Signale ausgegeben werden sowie die Bremsen und/oder die Lenkung auf ihren bevorstehenden Einsatz vorbereitet bzw. tatsächlich beeinflusst werden.

Die US 7 579 942 B2 beschreibt eine Vorrichtung zum Unterstützen eines sicheren Betriebs eines Fahrzeugs. Dabei wird mittels einer Vielzahl von Sensorsignalen und einem Modell eine Kollisionsvorhersage erstellt. Wenn ein Kollisionsrisiko oberhalb einer bestimmten Risikoschwelle ermittelt wird, wird ein Alarm ausgegeben.

Weiter Fahrunterstützungssysteme, die vor bevorstehenden Kollisionen warnen, sind in DE 102009034386 A1, US 7786896 B2, US 2008/091352 A1 und US 2008/084283 A1 offenbart.

Es ist die Aufgabe der vorliegenden Erfindung, ein Verfahren zum Ausgeben von Warnmeldungen eines Fahrerassistenzsystems der eingangs genannten Art und ein dazugehöriges Fahrerassistenzsystem zu schaffen, welche dem Fahrer des Fahrzeugs eine einfache Informationsaufnahme ermöglichen.

Diese Aufgabe wird erfindungsgemäß durch ein Verfahren mit den Merkmalen des Anspruchs 1 sowie ein Fahrerassistenzsystem mit den Merkmalen des Anspruchs 10 gelöst. Vorteilhafte Ausgestaltungen und Weiterbildungen ergeben sich aus den abhängigen Ansprüchen.

Das erfindungsgemäße Verfahren umfasst die folgenden Verfahrensschritte:
Es werden Daten zu der Bewegung des Fahrzeugs und Daten zu Unfallgefahren in der Umgebung des Fahrzeugs erfasst. Aus der erfassten Bewegung des Fahrzeugs wird eine geplante Bewegung des Fahrzeugs abgeleitet. Die erfassten Daten werden ausgewertet und einer konkreten Unfallgefahrenklasse zugeordnet, indem geprüft wird, ob ohne Veränderung der geplanten Bewegung des Fahrzeugs eine Kollision des Fahrzeugs mit einem anderen Objekt erfolgen wird, wobei bei der Klassenzuordnung der Unfallgefahren zwischen bevorstehenden Kollisionen und Risikogebieten unterschieden wird, wobei bei bevorstehenden Kollisionen systemseitig von einer Kollision ausgegangen wird, wenn die geplante Bewegung des Fahrzeugs nicht verändert wird, und bei erfassten Risikogebieten nicht sicher davon ausgegangen wird, dass es zu einer Kollision kommt. Die Zeitdauer bis zum Erreichen einer Position der Unfallgefahr und/oder bis zu einem Zeitpunkt, an welchem eine Veränderung der Fahrzeugbewegung zur Kollisionsvermeidung nötig ist, wird ermittelt. Der Unfallgefahr in Abhängigkeit von der ermittelten Zeitdauer wird eine Zeitkritikalitätsstufe zugeordnet und in Abhängigkeit von der zugeordneten Unfallgefahrenklasse und der Zeitkritikalitätsstufe wird eine Warnmeldung ausgegeben, deren Art in Abhängigkeit vom Ergebnis der Kollisionsprüfung und der Zeitkritikalitätsstufe erfolgt, wobei mitgeteilt wird, ob sich die Warnung nur auf ein allgemeines Risiko oder auf eine akut bevorstehende Kollision bezieht.

Die differenzierte Ausgabe der Warnmeldung hat den Vorteil, dass dem Fahrer auf einfache Weise mitgeteilt werden kann, ob sich die auszugebende Warnung nur auf ein allgemeines Risiko bezieht, das möglicherweise überhaupt nicht eintritt, oder ob sich die Warnung auf eine akut bevorstehende Kollision bezieht, die ohne das Eingreifen des Fahrers eintreten wird. Der Fahrer kann mit dem erfindungsgemäßen Verfahren noch gezielter angesprochen werden, wenn sein Eingreifen, insbesondere ein bestimmtes Eingreifen wie z.B. eine Vollbremsung oder ein Ausweichmanöver, sicher erforderlich ist.

Die Daten zu der Bewegung des Fahrzeugs umfassen im Sinne der Erfindung insbesondere die Geschwindigkeit und Richtung des Fahrzeugs. Die Bewegung kann je nach Situation z.B. als geradlinig gleichförmig angenommen werden. Ferner können auch Längs- und Querbeschleunigungen des Fahrzeugs berücksichtigt werden. Z.B. werden unmittelbar zurückliegende Änderungen des Geschwindigkeitsbetrags und/oder des Lenkwinkels, z.B. ein konstanter Lenkradius, berücksichtigt.

Die Daten zu Unfallgefahren umfassen im Sinne der Erfindung insbesondere Positionsdaten und/oder Bewegungsdaten von Objekten im Umfeld des eigenen Fahrzeugs, die mit den Daten zu der Bewegung des eigenen Fahrzeugs verglichen werden. Hieraus lassen sich Aussagen ableiten, ob dem Fahrzeug eine Kollision mit einem anderen Objekt droht.

Es wird dabei erfindungsgemäß zwischen zwei verschiedenen Typen von Unfallgefahren unterschieden, nämlich zwischen bevorstehenden Kollisionen und Risikogebieten. Während bei bevorstehenden Kollisionen systemseitig von einer Kollision ausgegangen wird, wenn die geplante Bewegung des Fahrzeugs nicht verändert wird, wird bei erfassten Risikogebieten nicht sicher davon ausgegangen, dass es zu einer Kollision kommt.

Zu diesem Zweck wird systemseitig nicht nur die erfasste Unfallgefahr selber analysiert, sondern außerdem die geplante Fahrzeugführung mit berücksichtigt. Diese umfasst insbesondere das Erfassen einer Normalsituation, die die Fahrerreaktionen beim routinemäßigen Durchführen der bevorstehenden Fahraufgabe berücksichtigt. So kann aus dem erfassten Straßenverlauf und/oder einer eingegebenen Navigationsroute abgeleitet werden, ob beispielsweise ein Fahrzeug in eine Kurve einfährt. Bei der Kollisionsprüfung ist dann insbesondere zu bewerten, ob der Fahrer diese Fahraufgabe gemäß Normalsituation durchführt. Insbesondere ist in diesem Fall nicht von einer geradlinigen Bewegung des Fahrzeugs auszugehen. In ähnlicher Weise kann systemseitig beispielsweise beim Einparken oder beim bereits eingeleiteten Bremsen vor einer Ampel verfahren werden, indem die geplante Fahrerreaktion gemäß Normalsituation für die geplante Bewegung des Fahrzeugs berücksichtigt wird.

Ferner umfassen die Daten zu Unfallgefahren auch Zustände, die einen Unfall allgemein begünstigen und somit ein allgemeines Risiko darstellen. Beispielsweise wird eine Nebelbank als latente Gefahr einer Kollision erfasst, wobei durch die herabgesetzte Sicht eine Kollision aber nicht zwingend vorhergesehen werden kann. Weitere Risiken sind z.B. Nässe oder Glätte, von denen auch ohne ein Kollisionshindernis die Gefahr ausgehen kann, dass das Fahrzeug ins Schleudern gerät oder sich überschlägt.

In einer Ausgestaltung des erfindungsgemäßen Verfahrens ist vorgesehen, dass die Art der Ausgabe der Warnmeldung in Abhängigkeit vom Ergebnis der Kollisionsprüfung visuell differenziert wird. Eine visuelle Differenzierung hat den Vorteil, dass sich die Warnmeldung bereits in einem Frühwarnstadium als visuelle Informationsausgabe gestalten lässt und der Fahrer das oder die Differenzierungsmerkmal(e) in einer vergleichsweise unkritischen Situation erlernt. Einerseits hat er in diesem Warnstadium in der Regel eine noch höhere Auffassungsgabe, um die Differenzierung in Abhängigkeit von der Kollisionsprüfung wahrzunehmen und sich einzuprägen. Andererseits wird auch verhindert, dass der Fahrer bereits in einer Vorwarnstufe mit penetranteren Ausgabemodalitäten, z.B. akustischen Signalen, belastet wird.

In einer bevorzugten Ausgestaltung des erfindungsgemäßen Verfahrens ist vorgesehen, dass die Warnmeldung eine Darstellung von Ringen, insbesondere Kreisringen, und/oder Ringsegmenten, insbesondere Kreisringsegmenten, umfasst, welche das Fahrzeugumfeld symbolisieren. Die Art der Ausgabe der Ringdarstellung erfolgt dabei in Abhängigkeit vom Ergebnis der Kollisionsprüfung, wobei die Anzahl der Ringe und/oder der Ringsegmente unabhängig vom Ergebnis der Kollisionsprüfung ist. Eine Ringdarstellung hat sich als besonders intuitiv erfassbare "Schutzschild"-Metapher etabliert, wie dies bereits in der eingangs zitierten DE 10 2007 029 033 A1 beschrieben wurde. Die Beibehaltung der Kreisringstruktur unabhängig vom Ergebnis der Kollisionsprüfung unterstützt die Vereinheitlichung mehrerer Warnsysteme und einen hohen Wiedererkennungsgrad für andere Warnparameter, insbesondere verschiedener Eskalationsstufen. Ferner ist es vorteilhaft, wenn außerdem die gesamte Bildaufteilung, die Konturen und der Maßstab der Kreisringdarstellung vom Ergebnis der Kollisionsprüfung nicht abhängig sind, um den Wiedererkennungsgrad zu steigern.

Bevorzugte Ausgestaltungen der Erfindung werden nachfolgend und in den Unteransprüchen beschrieben.

In einer Ausgestaltung des erfindungsgemäßen Verfahrens ist vorgesehen, dass sich die visuelle Darstellung der Warnmeldung in der Farbe, der Helligkeit, dem Transparenzgrad und/oder deren zeitlicher Muster unterscheidet. Zeitliche Muster umfassen z.B. ein Blinken, Aufdimmen oder ein Farbchangieren. Diese Merkmale lassen sich schnell erfassen, ohne dass der Fahrer seine Aufmerksamkeit explizit auf den visuellen Teil der Warnmeldung konzentrieren muss. Besonders intuitiv ist eine Farbwahl eines Gelb-Tons, wenn die Kollisionsprüfung negativ ausgefallen ist, und eines Rot-Tons, wenn die Kollisionsprüfung positiv ausgefallen ist.

In einer Ausgestaltung des erfindungsgemäßen Verfahrens ist vorgesehen, dass die Zeitdauer bis zum Erreichen einer Position der Unfallgefahr und/oder bis zu einem Zeitpunkt, an welchem eine Veränderung der Fahrzeugbewegung zur Kollisionsvermeidung nötig ist, ermittelt wird und der Unfallgefahr in Abhängigkeit von der ermittelten Zeitdauer eine Zeitkritikalitätsstufe zugeordnet wird. Die Art der Ausgabe der Warnmeldung erfolgt dann in Abhängigkeit von der zugeordneten Zeitkritikalitätsstufe. Insbesondere wird für den visuellen Teil der Warnmeldung eine Ringdarstellung oder Kreisringdarstellung gewählt und jeder Zeitkritikalitätsstufe ein entsprechender Ring bzw. Kreisring zugeordnet. Die Warnmeldung ist vorteilhafterweise des Weiteren in Abhängigkeit von der zugeordneten Zeitkritikalitätsstufe durch haptische und/oder akustische Merkmale differenziert. Auf diese Weise lassen sich die Warnmeldungen flexibel für die einzelnen Zeitkritikalitätsstufen konfigurieren.

Bei der Zuordnung der Zeitkritikalitätsstufen wird in einer Ausgestaltung des erfindungsgemäßen Verfahrens zusätzlich eine von der jeweiligen Fahrsituation und Fahraufgabe abhänge Normal-Reaktionszeit berücksichtigt. Diese Normal-Reaktionszeit kann für unübersichtliche oder komplexe Fahrsituationen, z.B. im Stadtverkehr, beispielsweise relativ groß gewählt werden. Sie kann für übersichtliche Fahrsituationen oder bei Fahraufgaben, bei denen der Fahrer mit spezifischen Kollisionsobjekten rechnet, wie beispielsweise beim Einparken, relativ gering angesetzt werden. Die Konfiguration der Zeitkritikalitätsstufen kann dabei so angepasst werden, dass sich unabhängig von der jeweiligen Fahraufgabe gemittelt über viele Standardverkehrssituationen eine ähnliche Wahrscheinlichkeitsverteilung ergibt, dass eine bestimmte Zeitkritikalitätsstufe erreicht wird. Auf diese Weise kann der Fahrer die Warnmeldungen besser der real existierenden Gefahr zuordnen.

In einer Ausgestaltung des erfindungsgemäßen Verfahrens ist vorgesehen, dass für eine erste Zeitkritikalitätsstufe unabhängig vom Ergebnis der Kollisionsprüfung keine akustische und/oder haptische Differenzierung der Ausgabe der Warnmeldung erfolgt und für eine zweite Zeitkritikalitätsstufe in Abhängigkeit vom Ergebnis der Kollisionsprüfung eine akustische und/oder haptische Differenzierung der Ausgabe der Warnmeldung erfolgt. Insbesondere werden für die unterste Zeitkritikalitätsstufe keine haptischen und/oder akustischen Signale ausgegeben, damit die Wachsamkeit des Fahrers diesbezüglich nicht im Laufe der Zeit gemindert wird. Bei höheren Zeitkritikalitätsstufen werden die Warnmeldungen für jene Situationen, bei denen eine Kollision ohne Eingriff des Fahrers bevorsteht, gegenüber allgemeinen Risikosituationen ohne sichere Kollision durch die Wiedergabe zusätzlicher haptischer und/oder akustischer Signale differenziert. Dabei werden gemäß einer Ausführungsform auch in allgemeinen Risikosituationen akustische und/oder haptische Signale ausgegeben, die bei einer bevorstehenden Kollision jedoch stärker ausgegeben werden.

Unterschreitet die Zeitdauer bis zum Erreichen der Position der Unfallgefahr einen kritischen Grenzwert, so erfolgt optional eine automatische Fahrzeugregelung, wenn mittels der Kollisionsprüfung erkannt wurde, dass ohne Veränderung der geplanten Bewegung des Fahrzeugs eine Kollision des Fahrzeugs mit einem anderen Objekt erfolgen wird und dass das Zeitintervall für eine Reaktion des Fahrers zu kurz ist. Der Beginn der automatischen Fahrzeugregelung wird dem Fahrer entsprechend mitgeteilt, damit er den Entzug der entsprechenden Fahraufgabe versteht. Bei Beendigung der automatischen Fahrzeugregelung wird dem Fahrer die Fahraufgabe, d.h. die vollständige Kontrolle über das Fahrzeug, wieder zurückgegeben, welches ihm ebenso mitgeteilt wird. Die Mitteilungen beim Entziehen und/oder der Rückgabe der Fahraufgabe erfolgt vorteilhafterweise visuell, ggf. durch eine akustische Unterstützung, z.B. in Form einer Klartextansage.

In einer Weiterbildung des erfindungsgemäßen Verfahrens wird aus der Richtung, der Geschwindigkeit, der Lenkung und/oder der Getriebestellung des Fahrzeugs eine Fahrsituationsklasse ermittelt. Beim Wechsel zwischen zwei Fahrsituationsklassen wird bei der visuellen Ausgabe der Warnmeldung die Perspektive des durch die Ringdarstellung symbolisierten Fahrzeugumfelds verändert. Die Darstellung wird an die jeweilige Situation angepasst, ohne den Wiedererkennungsgrad zu erniedrigen. Fahrsituationsklassen unterscheiden insbesondere zwischen Vorwärtsfahrt und Rückwärtsfahrt.

In einer Ausgestaltung des erfindungsgemäßen Verfahrens wird ein Einpark- oder Rangiervorgang erfasst und es wird die Ringdarstellung beim Wechsel in den Einpark- oder Rangiervorgang in eine Draufsicht verändert. Diese Anpassung ist für einen Einpark- oder Rangiervorgang zweckmäßig, um den Fahrer für Gefahren in allen möglichen Winkelbereichen im Fahrzeugumfeld zu sensibilisieren.

Insbesondere für Einpark- und Rangiervorgänge mit starken Lenkradeinschlägen kann es zu einer Verdeckung des bis dahin benutzten Anzeigebereich kommen. Ferner kann eine Fahrsituation vom Fahrer verlangen, dass er seine Blickrichtung verändern muss. Er muss z.B. nach hinten oder zur Seite schauen. Daher ist in einer weiteren Ausgestaltung vorgesehen, dass beim Wechsel zwischen zwei Fahrsituationsklassen die Ringdarstellung des Fahrzeugumfelds alternativ oder zusätzlich an einer geänderten Anzeigeposition, z.B. auf einem weiteren im Fahrzeug angeordneten Display, dargestellt wird.

Das erfindungsgemäße Fahrerassistenzsystem umfasst eine Vielzahl von Sensoren zum Erfassen von Daten zu der Bewegung des Fahrzeugs und Daten zu Unfallgefahren in der Umgebung des Fahrzeugs. Das erfindungsgemäße Fahrerassistenzsystem umfasst des Weiteren eine Auswerteeinheit, mit der die erfassten Daten auswertbar und einer konkreten Unfallgefahrenklasse zuordenbar sind, indem mittels der Auswerteeinheit aus der erfassten Bewegung des Fahrzeugs eine geplante Bewegung des Fahrzeugs ableitbar ist und prüfbar ist, ob ohne Veränderung der geplanten Bewegung des Fahrzeugs eine Kollision des Fahrzeugs mit einem anderen Objekt erfolgen wird. Es sind Ausgabemittel zur Ausgabe von Warnmeldungen, insbesondere ein oder mehrere Displays, einen Lautsprecher und haptische Ausgabemittel vorgesehen. Das Fahrassistenzsystem umfasst ferner eine Steuereinheit, welche mit der Auswerteeinheit und den Ausgabemitteln verbunden ist und welche die Ausgabemittel derart steuert, dass die Warnmeldungen in Abhängigkeit von der zugeordneten Unfallgefahrenklasse ausgebbar sind. Das erfindungsgemäße Fahrerassistenzsystem ist dadurch gekennzeichnet, dass mittels der Auswerteeinheit aus der erfassten Bewegung des Fahrzeugs eine geplante Bewegung des Fahrzeugs ableitbar ist und prüfbar ist, ob ohne Veränderung der geplanten Bewegung des Fahrzeugs eine Kollision des Fahrzeugs mit einem anderen Objekt erfolgen wird, und mittels der Steuereinheit die Ausgabemittel derart ansteuerbar sind, dass die Art der Ausgabe der Warnmeldung in Abhängigkeit vom Ergebnis dieser Kollisionsprüfung erfolgt. Das erfindungsgemäße Fahrerassistenzsystem ist insbesondere zum Durchführen des erfindungsgemäßen Verfahrens geeignet. Es weist somit auch die Vorteile des erfindungsgemäßen Verfahrens auf.

Die Erfindung wird nun anhand von Ausführungsbeispielen mit Bezug zu den Figuren näher erläutert.
- Figur 1: zeigt eine Ansicht des Cockpits eines Fahrzeugs mit einem Fahrerassistenzsystem gemäß einem Ausführungsbeispiel der Erfindung,
- Figur 2: zeigt schematisch den Prinzipaufbau des in der Figur 1 gezeigten Fahrerassistenzsystems,
- Figur 3: zeigt ein Flussdiagramm des Verfahrens zum Betreiben eines Fahrerassistenzsystems nach einem Ausführungsbeispiel des erfindungsgemäßen Verfahrens zum Ausgeben von Warnmeldungen eines Fahrerassistenzsystems und
- die Figuren 4 - 9: zeigen visuelle Wiedergaben von Warnmeldungen in Abhängigkeit vom Ergebnis einer Kollisionsprüfung, der zugeordneten Zeitkritikalitätsstufe und der Fahrsituationsklasse gemäß einem Ausführungsbeispiel des erfindungsgemäßen Verfahrens zum Ausgeben von Warnmeldungen eines Fahrerassistenzsystems.

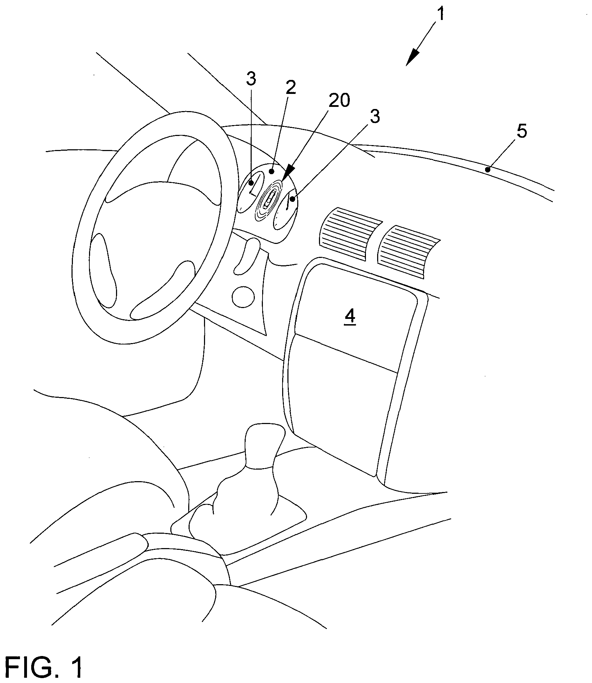

In der Figur 1 ist eine Ansicht des Cockpits eines Fahrzeugs 1 mit einem Fahrerassistenzsystem gemäß einem Ausführungsbeispiel der Erfindung dargestellt. Das Fahrerassistenzsystem nutzt die Kombianzeige 2 des Fahrzeugs 1, um Warnmeldungen z.B. in Form von Kreisringdarstellungen 20 visuell wiederzugeben, wie dies im Zusammenhang mit dem erfindungsgemäßen Verfahren noch näher erläutert wird. Die Warnmeldungen können dabei auf einer freiprogrammierbaren Anzeigefläche zwischen den Rundinstrumenten 3 angezeigt werden. Ferner ist ein Multifunktionsdisplay 4 im oberen Bereich der Mittelkonsole angeordnet, auf welchem auch die Warnmeldungen darstellbar sind.

Um dem Fahrer des Fahrzeugs 1 je nach Gefahrensituation und einer dazugehörigen Unfallgefahrenklasse die Warnmeldungen so zu differenzieren, dass er situationsgerecht gut informiert bzw. gewarnt wird, ohne dass dies dabei als belästigend empfunden würde, sind eine Reihe weiterer multimodaler Ausgabemittel im Cockpit des Fahrzeugs 1 vorgesehen. Entlang des Armaturenbretts, z.B. am Berührungspunkt mit der Windschutzscheibe, verläuft eine Leuchtleiste 5, beispielsweise ein Lichtleiter oder eine LED-Lichterkette (LED = Light Emitting Diode), die je nach Unfallgefahrenklasse in verschiedenen Farben und Mustern leuchten oder blinken kann. Als weitere Ausgabemittel sind ein Lautsprecher bzw. ein Signaltongenerator sowie verschiedene Haptikmittel, z.B. ein Vibrationsmotor im Lenkrad und an den Fußpedalen vorgesehen (nicht dargestellt).

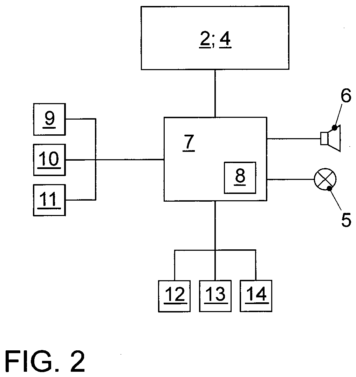

Der schematische Prinzipaufbau des Fahrerassistenzsystems ist in der Figur 2 dargestellt. Das Fahrerassistenzsystem setzt sich insbesondere aus einer Vielzahl von Fahrerassistenzeinrichtungen zusammen. Eine Steuereinheit 7 empfängt über Abstandssensoren 9 und über ein Kamerasystem 10 Daten zu Unfallgefahren in der Umgebung des Fahrzeugs. Die Abstandssensoren 9 sind beispielsweise nach an sich bekannter Art in den vorderen und hinteren Stoßfängern des Fahrzeugs 1 angeordnet. Das Kamerasystem 10 umfasst beispielsweise ein aufsteckbares Kameramodul, welches im Bereich zwischen Dachhimmel und Windschutzscheibe angeordnet ist. Daten zu der Bewegung des Fahrzeugs 1 werden einerseits über die Motorsteuerung empfangen (nicht dargestellt) und werden andererseits von einem GPS-Empfänger 11 (GPS = Global Positioning System) erfasst und an die Steuereinheit 7 übertragen. Über den GPS-Empfänger 11 sind auch allgemeine Daten zu der Umgebung des Fahrzeugs 1, z.B. bezüglich Brücken, Tunnel, Baustellen oder Staus, empfangbar. Diese Daten können alternativ oder ergänzend von einem Navigationssystem mit einer digitalen geographischen Karte übertragen werden.

In der Steuereinheit 7 ist eine Auswerteeinheit 8 integriert, in welcher die über die Abstandssensoren 9, das Kamerasystem 10 und den GPS-Empfänger 11 erfassten Daten zusammengeführt und ausgewertet werden. Dabei werden einzelne Unfallgefahren identifiziert und ihnen entsprechende Unfallgefahrenklassen zugeordnet. Insbesondere wird dabei ausgehend von der erfassten Bewegung des Fahrzeugs 1 aus dem sensorisch erfassten vorausliegenden Straßenabschnitt und mittels der gespeicherten Navigationsroute die geplante und wahrscheinliche Bewegung des Fahrzeugs 1 abgeleitet. Dazu werden die räumlichen und zeitlichen Unterschiede der Bewegung des Fahrzeugs 1 zu einer Normalbewegung gemäß Navigationsroute ermittelt. Ein Fahrer kann hier bereits frühzeitig vor unübersichtlichen Kurven gewarnt werden, wenn er von der Idealroute abkommt. Des Weiteren wird geprüft, ob ohne Veränderung der geplanten Bewegung des Fahrzeugs 1 eine Kollision des Fahrzeugs 1 mit einem anderen Objekt erfolgen wird.

Die Steuereinheit 7 erzeugt sodann dazugehörige Warnmeldungen und steuert verschiedene mit der Steuereinheit 7 verbundene Ausgabemittel zur Ausgabe der Warnmeldung an, wie dies weiter unten im Zusammenhang mit dem erfindungsgemäßen Verfahren noch näher erläutert wird.

Die Ausgabemittel umfassen die bereits mit Bezug zu der Figur 1 beschriebene Kombianzeige 2, das Multifunktionsdisplay 4 und die Leuchtleiste 5 zur visuellen Ausgabe der Warnmeldungen. Des Weiteren kann über die Steuereinheit 7 ein Lautsprecher 6 oder Signaltongenerator zur akustischen Ausgabe der Warnmeldungen angesteuert werden.

Ferner können über die Steuereinheit 7 verschiedene haptische Ausgaben der Warnmeldungen erzeugt werden. Dazu ist die Steuereinheit 7 mit dem Lenkrad 12, dem Gaspedal 13 und dem Bremssystem 14, insbesondere dem Bremspedal und dem Bremshydrauliksystem, verbunden. Mittels der Steuereinheit 7 können am Lenkrad 12 haptische Signale angesteuert werden, z.B. als leichtes Rütteln oder Vibrieren, um den Fahrer über diese Modalität mit der Warnmeldung zu erreichen. Der Antrittswiderstand des Gaspedals 13 kann mittels der Steuereinheit so angesteuert werden, dass dieser veränderbar ist. Außerdem kann mittels der Steuereinheit 7 der Bremsdruck in der Bremshydraulik erhöht werden oder das Bremssystem 14 zum Auslösen einer Vollbremsung angesteuert werden.

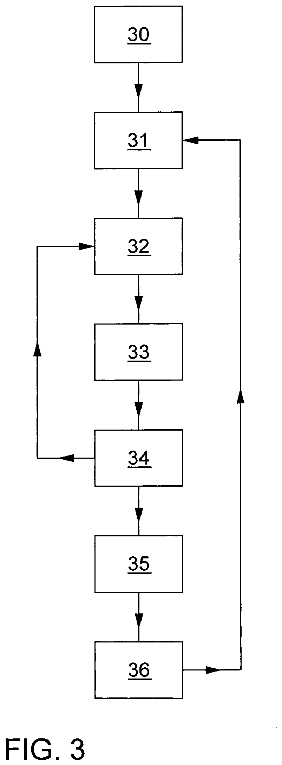

Mit Bezug zu der Figur 3 wird nun anhand eines Flussdiagramms der generische Ablauf des erfindungsgemäßen Verfahrens gemäß einem Ausführungsbeispiel beschrieben. Zum Durchführen des Verfahrens kann beispielsweise das mit Bezug zu den Figuren 1 und 2 beschriebene Fahrerassistenzsystem verwendet werden. Das Verfahren ist beispielsweise Bestandteil eines fest installierten Programms des Fahrerassistenzsystems. Es ist insbesondere geeignet, als übergreifende Routine eines Warnbaukastens für eine Vielzahl verschiedener Verkehrswarnprogramme und Unterstützungsprogramme zur Fahrzeugsteuerung eingesetzt zu werden.

Im Verfahrensschritt 30 wird das Fahrerassistenzprogramm initialisiert. Dies erfolgt beispielsweise, wenn der Zündschlüssel eingesteckt oder der Motor gestartet wird, damit der Fahrer gleich zu Beginn der Fahrt von dem übergreifenden Konzept des Warnbaukastens profitiert.

Im Verfahrensschritt 31 wird zunächst eine Fahrsituationsklasse bestimmt. Dazu greift die Auswerteeinheit 8 auf verschiedene momentan gültige Daten zur Fahrzeugsteuerung zu. Sie wertet insbesondere die Geschwindigkeit, den Lenkwinkel und die Getriebestellung des Fahrzeugs 1 aus. Auf diese Weise kann ein Einpark- und Rangiervorgang, z.B. bei eingelegtem Rückwärtsgang und/oder geringer Geschwindigkeit mit starkem und wechselndem Lenkradeinschlag, eine Stadtfahrt und eine Autobahnfahrt, z.B. bei Überschreiten einer bestimmten Geschwindigkeit, identifiziert werden. Die Fahrsituationsklasse wird als Parameter für den weiteren Programmablauf gespeichert.

Im Verfahrensschritt 32 wird die Unfallgefahrenerfassung durchgeführt. Dazu werden die empfangenen Daten in der Umgebung des Fahrzeugs 1 mit den Daten zu der Bewegung des Fahrzeugs 1 in der Auswerteeinheit 8 verglichen. Dabei können die Daten der verschiedenen Abstandssensoren 9 und des Kamerasystems 10 auch untereinander auf Konsistenz geprüft werden. Insbesondere werden so stehende oder bewegte Objekte im Fahrzeugumfeld identifiziert oder der Zustand der Umgebung als potentielle Unfallgefahr erfasst. Beispielsweise wird Nebel, schlechte Sicht oder ein rutschiger Fahrbahnuntergrund in der Richtung erfasst, in die sich das Fahrzeug 1 fortbewegt. Insbesondere wird erfasst, ob die Sicht in einen Winkelbereich derart schlecht ist, dass der Fahrbahnzustand und/oder Objekte in dieser Richtung nicht mehr hinreichend sicher erfassbar sind, d.h. auch nicht erfassbar ist, ob eine Kollision bevorsteht oder nicht.

In den Verfahrensschritten 33 und 34 wird mittels der Auswerteeinheit 8 jeder identifizierten potentiellen Unfallgefahr eine Unfallgefahrenklasse zugeordnet. Dabei wird im Verfahrensschritt 33 für jede der potentiellen Unfallgefahren geprüft, ob ohne Veränderung der geplanten Bewegung des Fahrzeugs 1, d.h. ohne dass fahrerseitig oder automatisch eine Bremsung oder Lenkung durchgeführt wird, eine Kollision des Fahrzeugs 1 mit einem anderen Objekt erfolgen würde. Die Klasseneinteilung der Unfallgefahren unterscheidet insbesondere zwischen zwei Typen von Unfallgefahren: Solchen, bei denen ohne Eingreifen in die Fahrzeugsteuerung eine Kollision sicher bzw. sehr wahrscheinlich ist, also vor einer konkreten Kollisionsgefahr gewarnt werden soll, und solchen, bei denen eine Kollision nicht sicher ist, also nur vor einem allgemeinen Risiko gewarnt werden soll.

Im Verfahrensschritt 34 wird für jede der potentiellen Unfallgefahren die Zeitdauer bis zum Erreichen der Position der Unfallgefahr ermittelt. Im Falle, dass die Position nicht sicher erreicht wird, d.h. dass es nicht unbedingt zu einer Kollision oder einem Eintritt in die Gefahrenzone kommt, kann diejenige Zeitdauer berücksichtigt werden, die bis zum Erreichen des kleinsten Abstands zur Position der Unfallgefahr verstreichen wird. In Abhängigkeit von der so ermittelten Zeitdauer wird der Unfallgefahr eine von drei Zeitkritikalitätsstufen zugeordnet. Insbesondere wird auch je nach Unfallgefahr berücksichtigt, ob das Fahrzeug 1 inklusive Reaktionszeit des Fahrers noch bis zur Position der Unfallsgefahr zum Stillstand gebracht werden kann.

Die Zuordnung der Zeitkritikalitätsstufen kann ferner in Abhängigkeit von der ermittelten Fahrsituationsklasse erfolgen. So wird der Fahrer beispielsweise beim Einparken sehr spezifische Unfallgefahren erwarten und reagiert gegebenenfalls schneller als in vergleichbaren Situationen im fließenden Verkehr. Die Ermittlung der Zeitdauer erfolgt aber unabhängig davon, mit welchem Ergebnis die Kollisionsprüfung im Verfahrensschritt 33 abgeschlossen wurde.

Als sinnvolle Einteilung bei Autobahnfahrten hat sich ergeben, dass die unterste Zeitkritikalitätsstufe dann erreicht ist, wenn die Zeitdauer noch mehr als 3 - 10 Sekunden, z.B. 5 Sekunden beträgt. In dieser Zeitdauer kann der Fahrer noch ohne großen Zeitdruck eine Information aufnehmen und besonnen und reflektiert handeln. Der obere Grenzwert kann je nach Situation festgesetzt oder offen gelassen werden. In letzterem Falle wird die unterste Zeitkritikalitätsstufe dann erreicht, wenn die potentielle Unfallgefahr erstmalig identifiziert wurde. Ersterer Fall ist insbesondere für Autobahnfahrten mit geringem Verkehrsaufkommen eine mögliche Option, um die unterste Zeitkritikalitätsstufe nicht wirkungslos abzunutzen. Im Falle eines am Horizont vorausfahrenden Fahrzeugs würde dann noch keine Vorwarnung ausgegeben.

Wird diese Zeitdauer unterschritten, liegt sie aber noch über einem zweiten Grenzwert zwischen 1,5 Sekunden und 3 Sekunden, z.B. bei 2 Sekunden, so ist die zweite Zeitkritikalitätsstufe erreicht. In dieser Zeitdauer hat der Fahrer immer noch die Möglichkeit, reflektiert zu handeln, insbesondere wenn er zuvor die Gelegenheit hatte, in der untersten Warnstufe informiert bzw. vorgewarnt zu werden.

Wird diese Zeitdauer weiter unterschritten, liegt sie aber noch über einem dritten Grenzwert zwischen 0,5 Sekunden und 1,5 Sekunden, z.B. bei 1 Sekunde, so ist die dritte und damit höchste Zeitkritikalitätsstufe erreicht. In dieser Zeitdauer hat der Fahrer in der Regel nur noch die Möglichkeit, reflexartig zu handeln.

Greift der Fahrer nun immer noch nicht ein, so kann der Fahrer systemseitig temporär ganz oder teilweise von seiner Fahraufgabe entbunden werden. Es wird z.B. eine automatische Vollbremsung durchgeführt.

Im Verfahrensschritt 35 wird schließlich eine Ergebniskonsolidierung durchgeführt, bei der die auszugebende Warnmeldung nach der kritischsten Unfallgefahr ausgerichtet wird. Werden mehrere potentielle Unfallgefahren erfasst, soll dabei verhindert werden, dass der Fahrer des Fahrzeugs 1 mit einer Fülle von Signalen überhäuft wird. Die Auswahl der kritischsten Unfallgefahr kann sich dabei je nach Ausführungsform nach der Zeitkritikalität oder nach dem Ergebnis der Kollisionsprüfung richten. Je nach Fahrsituationsklasse kann es zweckmäßig sein, den Fahrer vorrangig vor einem zeitkritischen Risiko, z.B. das bevorstehende Einfahren in eine Nebelbank, oder vor einem noch weit vorausliegenden Kollisionsobjekt, z.B. einem Stauende, zu warnen.

Im Verfahrensschritt 36 wird schließlich eine Warnmeldung in Abhängigkeit von der zugeordneten Unfallgefahrenklasse wiedergegeben. Die Art der Wiedergabe der Warnmeldung erfolgt dabei in Abhängigkeit vom Ergebnis der Kollisionsprüfung, insbesondere abhängig davon, ob bei der Ergebniskonsolidierung im Verfahrensschritt 35 bei der kritischsten Unfallgefahr die Kollisionsprüfung positiv oder negativ ausgefallen ist. Dazu steuert die Steuereinheit 7 eine oder mehrere Ausgabemittel an, d.h. die Anzeigeflächen der Kombianzeige 2 und des Multifunktionsdisplays 4, die Leuchtleiste 5, den Lautsprecher 6 oder die Haptikmittel im Lenkrad 12, dem Gaspedal 13 und dem Bremssystem 14.

Das Verfahren wird iterativ fortgeführt, wobei kontinuierlich Daten der Umgebung des Fahrzeugs 1 und Daten zu der Bewegung des Fahrzeugs 1 gemäß dem Verfahrensschritt 32 erfasst werden. Die Erfassung der Fahrsituationsklasse 31 kann optional auch nicht in dem iterativen Prozess umfasst sein, sondern nur dann berücksichtigt werden, wenn bestimmte Kriterien ein entsprechendes Ereignis auslösen. Beispielsweise ist das Einlegen des Rückwärtsgangs ein solches Ereignis, wodurch ein Auslösesignal an die Steuereinheit 7 gesendet wird, um in die Fahrsituationsklasse "Einparken/Rangieren" zu wechseln.

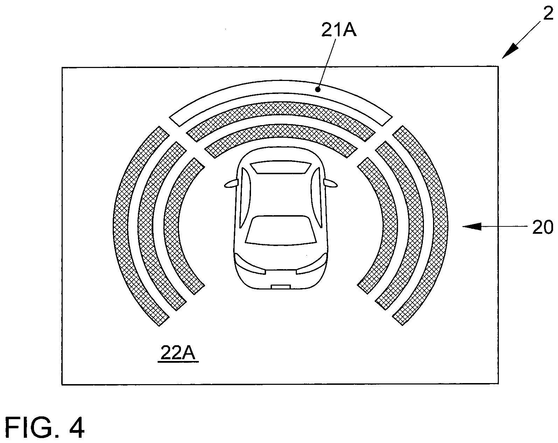

Die visuellen Ausgaben von Warnmeldungen in Abhängigkeit vom Ergebnis der Kollisionsprüfung, der zugeordneten Zeitkritikalitätsstufe und der Fahrsituationsklasse sind in den Figuren 4 bis 9 dargestellt. Die Wiedergabe der Warnmeldungen wird ferner auch akustisch und haptisch differenziert, insbesondere in Abhängigkeit vom Ergebnis der Kollisionsprüfung und der zugeordneten Zeitkritikalitätsstufe.

Um dem Fahrer eine vereinheitlichte Darstellung einer Vielzahl von Fahrerassistenzprogramm bereitzustellen, ist ein Grundtyp der visuellen Warnmeldung unabhängig von der jeweiligen Fahrsituationsklasse vorgesehen. Der Grundtyp basiert auf einer intuitiv als sogenanntes "Schutzschild"-Metapher erfassbaren Kreisringdarstellung 20, welche das Fahrzeugumfeld symbolisiert. Jeder Zeitkritikalitätsstufe ist ein Kreisring zugeordnet, der in Segmente eingeteilt ist. Die Segmenteinteilung kann entsprechend den Winkelbereichen erfolgen, die von einzelnen Abstandsensoren 9 bzw. dem Kamerasystem 10 erfassbar sind. Im gezeigten Fall gibt es vier 90°-Sektoren für jeweils eine Warnrichtung nach vorne, nach hinten, nach rechts und links.

Je nach erreichter Zeitkritikalitätsstufe werden die entsprechenden Kreisringsegmente 21A - 21G visuell hervorgehoben. Die Anzahl der dargestellten Kreisringe ist unabhängig vom Ergebnis der Kollisionsprüfung. Für alle Darstellungen werden drei Kreisringe verwendet, um den Fahrer nicht im Zweifel zu lassen, in welcher Phase der Eskalation sich das System gerade befindet.

In den Figuren 4 - 8 sind Situationen während einer Autobahnfahrt dargestellt. Die Kreisringdarstellung 20 wird als perspektivische Ansicht aus der Vogelperspektive in Fahrtrichtung gewählt und die Kreisringdarstellung 20 wird auf der Kombianzeige 2 dargestellt. Für diese Fahrsituationsklasse werden die hinteren Kreisringsegmente in der Umgebung des Fahrzeughecks nicht dargestellt. Die Perspektive kann optional in Abhängigkeit von der Fahrzeuggeschwindigkeit verändert werden. Die Perspektive kann für eine Autobahnfahrt z.B. flacher als für eine Stadtfahrt gewählt werden.

In der Figur 4 ergibt die Auswertung der Daten im Fahrzeug 1, dass voraus eine Unfallgefahr liegt. Sobald die Bedingung für die erste Zeitkritikalitätsstufe erreicht ist, wird das Kreisringsegment 21A visuell hervorgehoben. Der Hintergrund wird in einer Farbe 22A dargestellt, beispielsweise in einem hellen Grauton. Des Weiteren können Informationen zu der vorausliegenden Unfallgefahr angezeigt werden. In diesem Stadium wird davon ausgegangen, dass sich der Fahrer noch ohne Zeitdruck ein Bild von der Situation machen kann. Es kann sich in diesem Stadium noch um eine beliebige Unfallgefahr handeln. Eine akustische und haptische Ausgabe der Warnmeldung erfolgt nicht.

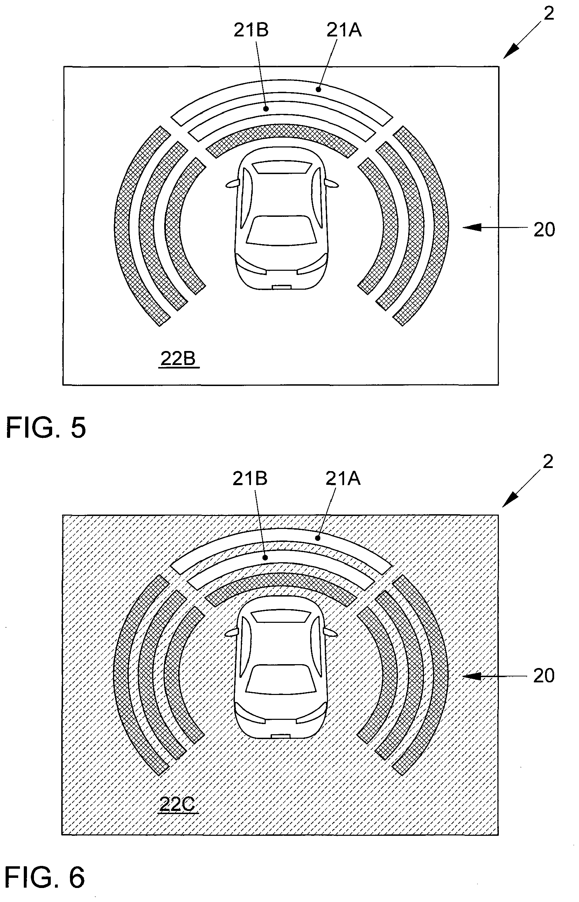

Ausgehend von der Figur 4 hat sich das Fahrzeug 1 in der Figur 5 dem Risikogebiet weiter genähert und es wird die Bedingung für die zweite Zeitkritikalitätsstufe erreicht. Die Kollisionsprüfung fällt negativ aus, d.h. dass es auch ohne Veränderung der Bewegung des Fahrzeugs 1 nicht sicher zu einer Kollision kommen wird. Ein Ausweichmanöver oder eine Bremsung sind nicht nötig. Bei der Unfallgefahr handelt es sich z.B. um eine unfallträchtige Wegstrecke, z.B. ein überfrorener Brückenabschnitt, ein Baustellenabschnitt oder eine Nebelbank. Zusätzlich zum Kreisringsegment 21A wird nun das Kreisringsegment 21B visuell hervorgehoben. Weil es sich nicht um eine konkrete Kollisionsgefahr handelt, sondern nur um ein allgemeines Risiko, wird für den Hintergrund nun die Farbe 22B gewählt, z.B. gelb. Hiermit verbindet der Fahrer intuitiv eine allgemeine Gefahrenwarnung. Zusätzlich zu der Darstellung auf der Kombianzeige 2 wird die Leuchtleiste 5 gelb illuminiert (nicht dargestellt). Eine akustische und haptische Ausgabe der Warnmeldung erfolgt nicht.

Alternativ zur Figur 5 fällt gemäß der in der Figur 6 dargestellten Situation die Kollisionsprüfung diesmal positiv aus, d.h. dass es ohne Veränderung der Bewegung des Fahrzeugs 1 sicher zu einer Kollision kommen wird. Bei der Unfallgefahr handelt es sich z.B. um ein liegengebliebenes Fahrzeug oder ein Stauende. Um den Fahrer wirksam auf die Notwendigkeit eines Ausweichmanövers oder einer Bremsung vorzubereiten, wird nicht nur das Kreisringsegment 21B visuell hervorgehoben, sondern zusätzlich für den Hintergrund eine Signalfarbe 22C gewählt, z.B. rot. Hiermit verbindet der Fahrer intuitiv eine reale Gefahr. Zusätzlich zu der Darstellung auf der Kombianzeige 2 wird die Leuchtleiste 5 rot illuminiert (nicht dargestellt) und ein einmaliges Gongsignal über den Lautsprecher 6 ausgegeben. Das Gongsignal soll den Fahrer einerseits warnen, andererseits aber so dezent ausgestaltet sein, dass eine reflexartige Reaktion des Fahrers, die zu diesem Zeitpunkt noch nicht nötig ist, vermieden wird.

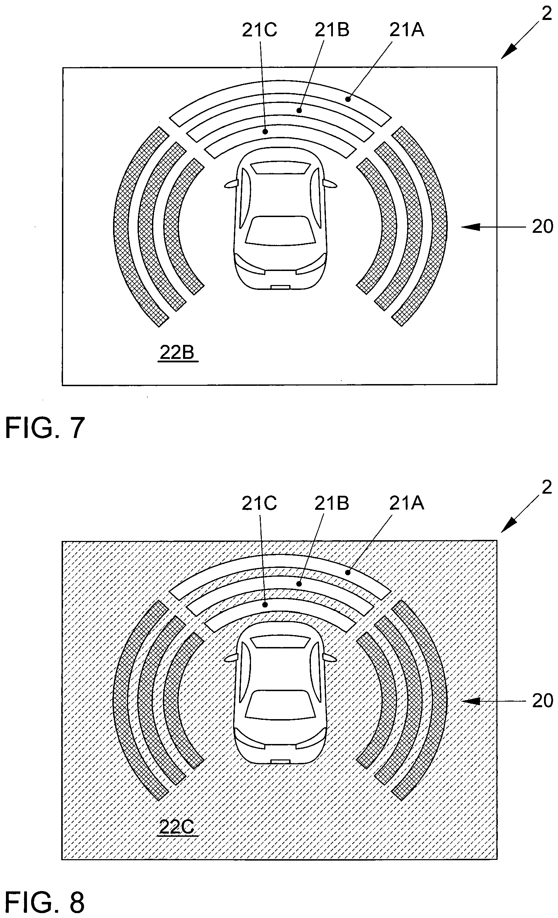

In der Figur 7 ist eine Situation dargestellt, in der die Bedingung für die dritte Zeitkritikalitätsstufe erreicht wurde und die Kollisionsprüfung negativ ausgefallen ist. Diese Situation kann aus der in der Figur 5 dargestellten Situation hervorgegangen sein, indem sich das Fahrzeug dem unfallträchtigen Streckenabschnitt weiter genähert hat. Alternativ kann diese Situation aber auch aus der in der Figur 6 dargestellten Situation hervorgegangen sein, indem der Fahrer z.B. frühzeitig erfolgreich ein Ausweichmanöver eingeleitet hat, sodass er nun nicht mehr mit dem liegengebliebenen Fahrzeug auf Kollisionskurs ist. Zusätzlich zum Kreisringsegment 21A und 21B wird nun das Kreisringsegment 21C visuell hervorgehoben. Weil es sich wieder nur um ein allgemeines Risiko handelt, wird für den Hintergrund wiederum die Farbe 22B gewählt. Die Illumination auf der Leuchtleiste 5 wird in der Leuchtintensität gesteigert und fängt an, zu blinken, um dem Fahrer das räumlich nahe Risiko zu vergegenwärtigen (nicht dargestellt). Eine akustische Ausgabe der Warnmeldung erfolgt nicht. Es kann aber optional vorgesehen sein, den Fahrer haptisch dahingehend zu warnen, dass das Gaspedal 13 mit einem erhöhten Gegendruck beaufschlagt wird. Hierdurch wird der Fahrer daran erinnert, dass in der erhöhten Risikozone eine Geschwindigkeitsreduzierung allgemein die Unfallgefahr und auch die Unfallschwere vermindern kann.

Alternativ zur Figur 7 fällt gemäß der in der Figur 8 dargestellten Situation die Kollisionsprüfung wiederum positiv aus, d.h. dass es ohne Veränderung der Bewegung des Fahrzeugs 1 sicher zu einer Kollision kommen wird. Um den Fahrer nun auf die letzte Möglichkeit aufmerksam zu machen, noch selber ein Ausweichmanöver oder eine Bremsung einzuleiten, wird nicht nur das Kreisringsegment 21C visuell hervorgehoben und für den Hintergrund die Signalfarbe 22C gewählt, sondern des Weiteren die Illumination der Leuchtleiste 5 verstärkt (nicht dargestellt) und ein 2kHz-Warnton über den Lautsprecher 6 ausgegeben. Außerdem wird die Warnmeldung haptisch ausgegeben, indem das Lenkrad 12 in leichte Vibration versetzt wird und der Bremsdruck im Bremssystem 14 erhöht wird.

Anstelle der visuellen Differenzierung oder zusätzlich zu der visuellen Differenzierung durch unterschiedliche Hintergrundsfarben kann insbesondere auch die Farbe, die Helligkeit und/oder der Transparenzgrad der Kreisringsegmente unterschiedlich ausfallen, je nachdem wie die Kollisionsprüfung ausgeht.

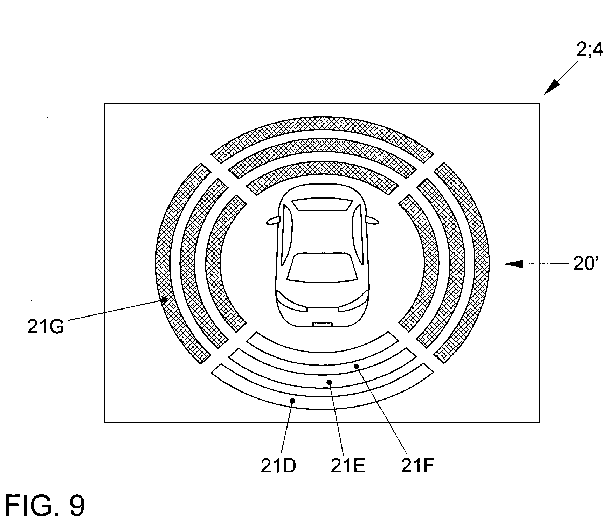

In der Figur 9 ist eine Situation während eines Einpark- oder Rangiervorgangs dargestellt. Am Ende einer Fahrt wird beispielsweise erfasst, dass das Fahrzeug zum Stillstand gebracht wurde. Daraufhin wird die Fahrsituationsklasse neu bestimmt und die Kreisringdarstellung 20 von der perspektivischen Ansicht in eine Draufsicht verändert. Hierdurch wird dem Fahrer vermittelt, dass nun verstärkt mit Unfallgefahren aus allen Richtungen zu rechnen ist. Im gezeigten Fall wurde der Rückwärtsgang eingelegt und eine Unfallgefahr im rückwärtigen Sektor des Fahrzeugs erfasst. Je nachdem, welche Zeitkritikalitätsstufe zugeordnet wird, werden die Kreisringsegmente 21D - 21F visuell hervorgehoben. Je nach Ergebnis der Kollisionsprüfung wird die Ausgabe der Warnmeldung differenziert. Im Falle einer positiven Kollisionsprüfung wird zusätzlich zu der visuellen Ausgabe der Warnmeldung ein akustisches Signal über den Lautsprecher 6 ausgegeben.

Während eines Einpark- oder Rangiervorgangs wird die Kreisringdarstellung 20 nicht nur auf der Kombianzeige 2, sondern zusätzlich automatisch auf dem Multifunktionsdisplay 4 und gegebenenfalls auf weiteren Displays dargestellt. Hierdurch wird sichergestellt, dass, wenn durch ungünstige Lenkradeinschläge der Blick auf die Kombianzeige 2 verstellt wird, der Fahrer die Kreisringdarstellung 20 an anderer Position ablesen kann.

### Bezugszeichenliste

- 1: Fahrzeug
- 2: Kombianzeige
- 3: Rundinstrumente
- 4: Multifunktionsdisplay
- 5: Leuchtleiste
- 6: Lautsprecher
- 7: Steuereinheit
- 8: Auswerteeinheit
- 9: Abstandssensoren
- 10: Kamerasystem
- 11: GPS-Empfänger
- 12: Lenkrad
- 13: Gaspedal
- 14: Bremssystem
- 20, 20': Kreisringdarstellung
- 21A - 21G: Kreisringsegmente
- 22A - 22C: Darstellungsfarbe
- 30: Initialisierung
- 31: Fahrsituationsbestimmung
- 32: Unfallgefahrenerfassung
- 33: Kollisionsprüfung
- 34: Zuordnung einer Zeitkritikalitätsstufe
- 35: Ergebniskonsolidierung
- 36: Ausgabe der Warnmeldung

## Patentansprüche

1. Verfahren zum Ausgeben von Warnmeldungen eines Fahrerassistenzsystems (2 - 14) in einem Fahrzeug (1), bei dem
- Daten zu der Bewegung des Fahrzeugs (1) und Daten zu Unfallgefahren in der Umgebung des Fahrzeugs (1) erfasst werden (32),
- aus der erfassten Bewegung des Fahrzeugs (1) eine geplante Bewegung des Fahrzeugs (1) abgeleitet wird,
- die erfassten Daten ausgewertet und einer konkreten Unfallgefahrenklasse zugeordnet werden, indem geprüft wird, ob ohne Veränderung der geplanten Bewegung des Fahrzeugs (1) eine Kollision des Fahrzeugs (1) mit einem anderen Objekt erfolgen wird, wobei bei der Klassenzuordnung der Unfallgefahren zwischen bevorstehenden Kollisionen und Risikogebieten unterschieden wird, wobei bei bevorstehenden Kollisionen systemseitig von einer Kollision ausgegangen wird, wenn die geplante Bewegung des Fahrzeugs (1) nicht verändert wird, und bei erfassten Risikogebieten nicht sicher davon ausgegangen wird, dass es zu einer Kollision kommt,
- die Zeitdauer bis zum Erreichen einer Position der Unfallgefahr und/oder bis zu einem Zeitpunkt, an welchem eine Veränderung der Fahrzeugbewegung zur Kollisionsvermeidung nötig ist, ermittelt wird,
- der Unfallgefahr in Abhängigkeit von der ermittelten Zeitdauer eine Zeitkritikalitätsstufe (34) zugeordnet wird und
- in Abhängigkeit von der zugeordneten Unfallgefahrenklasse und der Zeitkritikalitätsstufe eine Warnmeldung ausgegeben wird (36), deren Art in Abhängigkeit vom Ergebnis der Kollisionsprüfung (33) und der Zeitkritikalitätsstufe erfolgt, wobei mitgeteilt wird, ob sich die Warnung nur auf ein allgemeines Risiko oder auf eine akut bevorstehende Kollision bezieht.

2. Verfahren nach Anspruch 1,
**dadurch gekennzeichnet,**
**dass** die Art der Ausgabe der Warnmeldung in Abhängigkeit vom Ergebnis der Kollisionsprüfung (33) visuell differenziert wird.

3. Verfahren nach Anspruch 2,
**dadurch gekennzeichnet, dass**
- die Warnmeldung eine Darstellung von Ringen und/oder Ringsegmenten (20) umfasst, welche das Fahrzeugumfeld symbolisieren,
- die Art der Ausgabe der Ringdarstellung (20) in Abhängigkeit vom Ergebnis der Kollisionsprüfung (33) erfolgt,
- wobei die Anzahl der Ringe und/oder der Ringsegmenten (21A - 21F) unabhängig vom Ergebnis der Kollisionsprüfung (33) ist.

4. Verfahren nach einem der Ansprüche 2 oder 3,
**dadurch gekennzeichnet,**
**dass** sich die visuelle Darstellung der Warnmeldung in der Farbe (22A - 22C), der Helligkeit, dem Transparenzgrad und/oder deren zeitlicher Muster unterscheidet.

5. Verfahren nach Anspruch 1,
**dadurch gekennzeichnet, dass**
- für eine erste Zeitkritikalitätsstufe unabhängig vom Ergebnis der Kollisionsprüfung (33) keine akustische und/oder haptische Differenzierung der Ausgabe der Warnmeldung erfolgt und
- für eine zweite Zeitkritikalitätsstufe in Abhängigkeit vom Ergebnis der Kollisionsprüfung (33) eine akustische und/oder haptische Differenzierung der Ausgabe der Warnmeldung erfolgt.

6. Verfahren nach einem der Ansprüche 2 bis 5,
**dadurch gekennzeichnet, dass**
- aus der Richtung, der Geschwindigkeit, der Lenkung und/oder der Getriebestellung des Fahrzeugs eine Fahrsituationsklasse (31) ermittelt wird und
- beim Wechsel zwischen zwei Fahrsituationsklassen (31) bei der visuellen Ausgabe der Warnmeldung die Perspektive des durch die Ringdarstellung (20) symbolisierten Fahrzeugumfelds verändert wird.

7. Verfahren nach Anspruch 6,
**dadurch gekennzeichnet, dass**
- ein Einpark- oder Rangiervorgang erfasst wird und
- die Ringdarstellung (20) beim Wechsel in den Einpark- oder Rangiervorgang in eine Draufsicht (20') verändert wird.

8. Verfahren nach Anspruch 6 oder 7,
**dadurch gekennzeichnet,**
**dass** beim Wechsel zwischen zwei Fahrsituationsklassen (31) die Ringdarstellung (20) des Fahrzeugumfelds alternativ oder zusätzlich an einer geänderten Anzeigeposition (2; 4) dargestellt wird.

9. Fahrerassistenzsystem zur Durchführung des Verfahrens nach einem der Ansprüche 1 bis 8, umfassend
- eine Vielzahl von Sensoren (9, 10, 11) zum Erfassen von Daten zu der Bewegung des Fahrzeugs (1) und Daten zu Unfallgefahren in der Umgebung des Fahrzeugs (1),
- eine Auswerteeinheit (8), mit der die erfassten Daten auswertbar und einer konkreten Unfallgefahrenklasse zuordenbar sind, indem mittels der Auswerteeinheit (8) aus der erfassten Bewegung des Fahrzeugs (1) eine geplante Bewegung des Fahrzeugs (1) ableitbar ist und prüfbar ist, ob ohne Veränderung der geplanten Bewegung des Fahrzeugs (1) eine Kollision des Fahrzeugs (1) mit einem anderen Objekt erfolgen wird,
- Ausgabemittel (2, 4, 5, 6) zur Ausgabe von Warnmeldungen und
- eine Steuereinheit (7), welche mit der Auswerteeinheit (8) und den Ausgabemitteln (2, 4, 5, 6) verbunden ist und welche die Ausgabemittel (2, 4, 5, 6) derart steuert, dass die Warnmeldungen in Abhängigkeit von der zugeordneten Unfallgefahrenklasse ausgebbar sind,
**dadurch gekennzeichnet, dass**
- mittels der Auswerteeinheit (8) bei der Klassenzuordnung der Unfallgefahren zwischen bevorstehenden Kollisionen und Risikogebieten unterscheidbar ist, wobei die Auswerteeinheit (8) bei bevorstehenden Kollisionen systemseitig von einer Kollision ausgeht, wenn die geplante Bewegung des Fahrzeugs (1) nicht verändert wird, und bei Risikogebieten nicht sicher davon ausgeht, dass es zu einer Kollision kommt,
- die Zeitdauer bis zum Erreichen einer Position der Unfallgefahr und/oder bis zu einem Zeitpunkt, an welchem eine Veränderung der Fahrzeugbewegung zur Kollisionsvermeidung nötig ist, ermittelt wird,
- der Unfallgefahr in Abhängigkeit von der ermittelten Zeitdauer eine Zeitkritikalitätsstufe (34) zugeordnet wird und
- mittels der Steuereinheit (7) die Ausgabemittel (2, 4, 5, 6) derart ansteuerbar sind, dass die Art der Ausgabe der Warnmeldung in Abhängigkeit vom Ergebnis der Kollisionsprüfung (33) und der Zeitkritikalitätsstufe erfolgt.

## Claims

1. Method for outputting warnings from a driver assistance system (2-14) in a vehicle (1), in which:
- data pertaining to the movement of the vehicle (1) and data pertaining to risks of accident in the surroundings of a vehicle (1) are captured (32),
- a planned movement of the vehicle (1) is derived from the detected movement of the vehicle (1),
- captured data are evaluated and assigned to a specific accident risk class by virtue of a check being performed to determine whether a collision between the vehicle (1) and another object will occur without alteration of the planned movement of the vehicle (1), the class assignment for the risks of accident resulting in a distinction being drawn between imminent collisions and risk areas, wherein imminent collisions result in a collision being assumed on the system if the planned movement of the vehicle (1) is not altered, and detected risk areas resulting in it not being safely assumed that a collision will occur,
- the period before a position for the risk of accident is reached and/or before a time at which an alteration of the vehicle movement to avoid a collision is necessary is ascertained,
- the risk of accident is assigned a time criticality level (34) on the basis of the ascertained period, and
- the assigned accident risk class and the time criticality level are taken as a basis for outputting (36) a warning, the type of which is dependent on the result of the collision check (33) and the time criticality level, wherein notification is provided as to whether the warning relates only to a general risk or to an acutely imminent collision.

2. Method according to Claim 1,
**characterized**
**in that** the type of output of the warning is distinguished visually on the basis of the result of the collision check (33).

3. Method according to Claim 2,
**characterized in that**
- the warning comprises a depiction of rings and/or ring segments (20) symbolizing the vehicle environment,
- the type of output of the ring depiction (20) is dependent on the result of the collision check (33),
- wherein the number of rings and/or ring segments (21A-21F) is independent of the result of the collision check (33).

4. Method according to either of Claims 2 and 3,
**characterized in that**
the visual depiction of the warning differs in colour (22A-22C), brightness, degree of transparency and/or temporal pattern thereof.

5. Method according to Claim 1,
**characterized in that**
- no audible and/or haptic distinction for the output of the warning is made for a first time criticality level, regardless of the result of the collision check (33), and
- an audible and/or haptic distinction for the output of the warning is made for a second time criticality level on the basis of the result of the collision check (33).

6. Method according to one of Claims 2 to 5,
**characterized in that**
- a driving situation class (31) is ascertained from the direction, speed, steering and/or gear selection of the vehicle, and
- the perspective of the vehicle environment symbolized by the ring depiction (20) is altered for the visual output of the warning when changing between two driving situation classes (31).

7. Method according to Claim 6,
**characterized in that**
- a parking or manoeuvring process is detected, and
- the ring depiction (20) is altered to a plan view (20') when changing to the parking or manoeuvring process.

8. Method according to Claim 6 or 7,
**characterized in that**
the ring depiction (20) of the vehicle environment is alternatively or additionally depicted at a changed display position (2; 4) when changing between two driving situation classes (31).

9. Driving assistance system for performing the method according to one of Claims 1 to 8, comprising
- a multiplicity of sensors (9, 10, 11) for capturing data pertaining to the movement of the vehicle (1) and data pertaining to risks of accident in the surroundings of the vehicle (1),
- an evaluation unit (8) by means of which the captured data are evaluable and assignable to a specific accident risk class by virtue of a planned movement of the vehicle (1) being derivable from the detected movement of the vehicle (1) by means of the evaluation unit (80) and it being checkable whether a collision between the vehicle (1) and another object will occur without alteration of the planned movement of the vehicle (1),
- output means (2, 4, 5, 6) for outputting warnings, and
- a control unit (7) that is connected to the evaluation unit (8) and to the output means (2, 4, 5, 6) and that controls the output means (2, 4, 5, 6) such that the warnings are outputtable on the basis of the assigned accident risk class,
**characterized in that**
- the class assignment for the risks of accident results in a distinction being drawable between imminent collisions and risk areas by means of the evaluation unit (8), wherein imminent collisions result in the evaluation unit (8) assuming, on the system, a collision if the planned movement of the vehicle (1) is not altered, and risk areas result in it not safely assuming that a collision will occur,
- the period before a position for the risk of accident is reached and/or before a time at which an alteration of the vehicle movement to avoid a collision is necessary is ascertained,
- the risk of accident is assigned a time criticality level (34) on the basis of the ascertained period, and
- the output means (2, 4, 5, 6) are actuatable by means of the control unit (7) such that the type of output of the warning is dependent on the result of the collision check (33) and the time criticality level.

## Revendications

1. Procédé d'émission de messages d'alerte d'un système d'aide à la conduite (2-14) dans un véhicule (1), dans lequel
- des données concernant le déplacement du véhicule (1) et des données concernant les risques d'accident dans l'environnement du véhicule (1) sont acquises (32),
- un déplacement planifié du véhicule (1) est déduit du déplacement enregistré du véhicule (1),
- les données acquises sont évaluées et associées à une classe spécifique de risque d'accident en testant si une collision du véhicule (1) avec un autre objet se produira sans modifier le déplacement planifié du véhicule (1), dans lequel une distinction est faite entre les collisions imminentes et les zones à risque lors de l'association des risques d'accident à des classes,
dans lequel, dans le cas de collisions imminentes, une collision est présumée si le déplacement planifié du véhicule (1) n'est pas modifié et, dans le cas de zones à risque détectées, il n'est pas présumé avec certitude qu'une collision se produira,
- la durée jusqu'à ce qu'une position du risque d'accident soit atteinte et/ou jusqu'à un point dans le temps où une modification du déplacement du véhicule est nécessaire pour éviter la collision est déterminée,
- un niveau de criticité temporelle (34) est associé au risque d'accident en fonction de la durée déterminée et
- un message d'alerte (36) est émis en fonction de la classe de risque d'accident associée et du niveau de criticité temporelle, dont le type dépend du résultat du test de collision (33) et du niveau de criticité temporelle, dans lequel il est indiqué si l'alerte se rapporte uniquement à un risque général ou à une collision imminente.

2. Procédé selon la revendication 1,
**caractérisé en ce que** le type d'émission du message d'alerte est différencié visuellement en fonction du résultat du test de collision (33).

3. Procédé selon la revendication 2,
**caractérisé en ce que**
- le message d'alerte comprend une représentation en anneaux et/ou en segments d'anneaux (20) symbolisant l'environnement du véhicule,
- **en ce que** le type d'émission de la représentation en anneaux (20) dépend du résultat du test de collision (33),
- dans lequel les nombres d'anneaux et/ou de segments d'anneaux (21A-21F) sont indépendants du résultat du test de collision (33).

4. Procédé selon l'une des revendications 2 ou 3,
**caractérisé en ce que** la représentation visuelle du message d'alerte diffère par la couleur (22A - 22C), la luminosité, le degré de transparence et/ou son motif temporel.

5. Procédé selon la revendication 1,
**caractérisé en ce que**,
- pour un premier niveau de criticité temporelle, aucune différenciation acoustique et/ou haptique de l'émission du message d'alerte n'a lieu quel que soit le résultat du test de collision (33) et
- pour un second niveau de criticité temporelle, une différenciation acoustique et/ou haptique de l'émission du message d'alerte a lieu en fonction du résultat du test de collision (33).

6. Procédé selon l'une des revendications 2 à 5, **caractérisé**
- **en ce qu'**une classe de situation de conduite (31) est déterminée à partir de la direction, de la vitesse, du braquage et/ou du rapport de transmission du véhicule et en ce que,
- lors du basculement entre deux classes de situation de conduite (31), la perspective de l'environnement du véhicule symbolisée par la représentation en anneaux (20) est modifiée lors de l'émission sous forme visuelle du message d'alerte.

7. Procédé selon la revendication 6,
**caractérisé**
- **en ce qu'**un processus de stationnement ou de manoeuvre est détecté et
- **en ce que** la représentation en anneaux (20) est transformée en une vue en plan (20') lors du basculement au processus de stationnement ou de manoeuvre.

8. Procédé selon la revendication 6 ou 7,
**caractérisé en ce que**, lors du basculement entre deux classes de situation de conduite (31), la représentation en anneaux (20) de l'environnement du véhicule est affichée alternativement ou en plus à une position d'affichage modifiée (2 ; 4).

9. Système d'aide à la conduite destiné à mettre en oeuvre le procédé selon l'une quelconque des revendications 1 à 8, comprenant
- une pluralité de capteurs (9, 10, 11) destinés à collecter des données concernant le déplacement du véhicule (1) et des données concernant les risques d'accident dans l'environnement du véhicule (1),
- une unité d'évaluation (8) avec laquelle les données collectées peuvent être évaluées et associées à une classe de risques d'accident spécifique, en déduisant au moyen de l'unité d'évaluation (8) un déplacement planifié du véhicule (1) à partir du déplacement détecté du véhicule (1) et en testant si une collision du véhicule (1) avec un autre objet se produira sans modifier le déplacement planifié du véhicule (1),
- des moyens d'émission (2, 4, 5, 6) destinés à émettre des messages d'alerte et
- une unité de commande (7) qui est reliée à l'unité d'évaluation (8) et aux moyens d'émission (2, 4, 5, 6) et qui commande les moyens d'émission (2, 4, 5, 6) de manière à ce que les messages d'alerte puissent être émis en fonction de la classe de risque d'accident qui leur est associée,
**caractérisé**
- **en ce qu'**une distinction peut être effectuée entre les collisions imminentes et les zones à risque au moyen de l'unité d'évaluation (8) lors de la classification des risques d'accident, dans lequel l'unité d'évaluation (8) présume une collision côté système en cas de collisions imminentes, si le déplacement planifié du véhicule (1) n'est pas modifié, et dans le cas de zones à risque, elle ne présume pas avec certitude qu'une collision se produira,
- la durée jusqu'à ce qu'une position du risque d'accident soit atteinte et/ou jusqu'au point dans le temps où une modification du déplacement du véhicule est nécessaire pour éviter une collision est déterminée,
- un niveau de criticité temporelle (34) est associé au risque d'accident en fonction de la durée déterminée et
- les moyens d'émission (2, 4, 5, 6) peuvent être commandés par l'unité de commande (7) de manière à ce que le type d'émission du message d'alerte dépende du résultat du test de collision (33) et du niveau de criticité temporelle.
